# FASCICULE DE BREVET EUROPEEN

(11) **EP 2 237 194 B1**
(45) Date de publication et mention de la délivrance du brevet: **05.06.2013**
(21) Numéro de dépôt: 10159053.7
(22) Date de dépôt: 02.04.2010
(51) Int. Cl.: G06K 19/077

(54) **Etiquette d'identification de radio fréquence (RFID) et procédé de fabrication de l'étiquette**
RFID-Etikett und Herstellungsverfahren dieses Etiketts
Radiofrequency identification (RFID) tag and method for manufacturing such a tag

(30) Priorité: 03.04.2009 FR 0901619
(43) Date de publication de la demande: 06.10.2010
(73) Titulaire: Paragon Identification, 18410 Argent sur Sauldre (FR)
(72) Inventeur: Bouchard, Olivier, 41200 Romorantin (FR)
(74) Mandataire: Debay, Yves

(56) Documents cités:
- EP-A- 1 411 465
- EP-A- 1 562 140
- EP-A- 1 612 723
- EP-A- 1 720 121
- WO-A-2006/122266
- US-A- 5 528 222

## Description

La présente invention concerne le domaine de l'identification par radio-fréquence (RFID) et plus particulièrement les étiquettes RFID

La présente invention propose une étiquette RFID et son procédé de fabrication

L'identification par radio-fréquence est de plus en plus répandue pour être utilisée dans de nombreux domaines. Ce type d'identification est généralement basé sur un système constitué d'une puce ou composant électronique et d'une antenne associées à un support Ce support peut avoir plusieurs formes. Il peut être, par exemple, sous forme de carte RFID, appelée aussi carte à puce sans contact permettant, par exemple, l'identification de personnes autorisant ainsi l'entrée d'un immeuble ou la délivrance de services pour lesquels la personne identifiée est abonnée. Il peut être également sous forme d'étiquette collée sur un produit utilisé dans le commerce pour identifier ce produit ou sur le pare-brise d'un véhicule autorisant ainsi l'accès, par exemple, à un parking ou une autoroute après identification.

Les étiquettes RFID doivent répondre à plusieurs exigences. L'une d'elles est la résistance à la lumière En effet, les étiquettes RFID utilisées pour les véhicules, collées derrière un pare-brise, subissent l'action des rayons ultraviolets (UV) du soleil ce qui entraîne une dégradation rapide de l'étiquette et donc une détérioration du système de puce et d'antenne.

Le document EP 1 411 465 A1 décrit une carte rétro-réfléchissante possédant un circuit imprimé. Les couches de cette carte et plus spécialement la couche qui est directement exposée au rayonnement UV est en résine mélangée avec des absorbeurs de rayonnement UV qui permet à la carte de résister à la chaleur et aux conditions météorologiques. Ce type de carte pose le problème des matériaux utilisés pour la ou les couches permettant de résister au rayonnement UV. En effet, ces matériaux peuvent être onéreux et difficiles à fabriquer. En outre, il est difficile d'utiliser des matériaux autres que des matériaux à base de résines ou équivalents à la résine pour pouvoir intégrer les absorbeurs de rayonnement UV.

La présente invention a pour but de donner une solution technique en proposant une étiquette RFID, son procédé de fabrication et une machine selon le procédé de fabrication de l'étiquètte RFID.

Pour atteindre ce but, l'étiquette RFID est composée d'au moins :
- une couche fonctionnelle comprenant au moins :
   o un composant électronique,
   o une antenne connectée au composant électronique ,
- une couche supérieure ;
- une couche inférieure ayant une face adhésive ;
   les couches supérieure et inférieure sont constituées d'une ou plusieurs matières apte à résister au rayonnement ultraviolet et/ou à filtrer le rayonnement ultraviolet, **caractérisée en ce qu'**une couche de protection supplémentaire contre le rayonnement ultraviolet est imprimée sur la face opposée à la surface adhésive de la couche inférieure.

Selon une autre particularité, la couche supérieure est en papier.

Selon une autre particularité, la couche supérieure est en matière synthétique possédant un revêtement apte à être imprimé.

Selon une autre particularité, la couche inférieure est en papier apte à résister à un rayonnement ultraviolet et/ou à filtrer le rayonnement ultraviolet et possédant une face autoadhésive protégée par une couche détachable.

Selon une autre particularité, la couche inférieure est en matière synthétique apte à résister à un rayonnement ultraviolet et/ou à filtrer le rayonnement ultraviolet et possédant une face autoadhésive protégée par une couche détachable.

Selon une autre particularité, la couche inférieure a une surface apte à être imprimée.

Selon une autre particularité, la face autoadhésive est constituée d'une colle dont les propriétés physico-chimiques ne s'altèrent pas si elle est soumise à un rayonnement ultraviolet.

Selon une autre particularité, la couche détachable est en papier.

Selon une autre particularité, la couche détachable est en matière synthétique.

Selon une autre particularité, la couche détachable est siliconée.

Selon une autre particularité, la couche fonctionnelle est en papier sur lequel est gravée ou imprimée l'antenne connectée au composant électronique.

Selon une autre particularité, la couche fonctionnelle est en matière synthétique souple sur laquelle est gravée ou imprimée l'antenne connectée au composant électronique.

Selon une autre particularité, les couches sont assemblées entre elles par collage.

Selon une autre particularité, la couche supérieure (1) et/ou la face correspondant à la surface adhésive de la couche inférieure (2) et/ou la couche fonctionnelle (3) possèdent une combinaison d'encres aptes à résister aux rayonnements ultraviolets et/ou à filtrer le rayonnement ultraviolet.

Selon une autre particularité, la couche supérieure (1) et/ou la couche inférieure (2) et/ou la couche fonctionnelle (3) possèdent une ou plusieurs couches d'impression de combinaison d'encre aptes à résister aux rayonnements ultraviolets et/ou à filtrer le rayonnement ultraviolet.

Un autre but est atteint en proposant un procédé de fabrication de l'étiquette RFID **caractérisé en ce que** la couche supérieure et la couche inférieure sont alimentés en continu par des bobines fournissant des bandes de largeur au moins égale à un multiple d'une des dimensions de l'étiquette RFID, en ce que la couche fonctionnelle est alimentée en continu par au moins une bobine fournissant au moins une bande en parallèle et en ce qu'il comporte au moins les étapes suivantes :
- une étape de pré-impression en continu et/ou de prédécoupage en continu de la bande de la couche inférieure en une pluralité d'étiquettes ;
- une étape de contre-collage en continu ou de dépôt de la pluralité d'étiquettes de la bande de la couche inférieure sur la bande d'une couche détachable ;
- si besoin, une étape d'impression en continu de la bande de la couche supérieure ;
- une étape de dépôt en continu de la ou des bandes de la couche fonctionnelle sur la surface intérieure encollée de la bande de la couche inférieure ;
- une étape de dépôt en continu de la bande encollée de la couche supérieure sur la ou les bandes de la couche fonctionnelle ;
- une étape de découpage en continu ;
- une étape de contrôle en ligne en continu ;
- une étape de personnalisation, graphique et électrique, en ligne en continu,
l'étape de pré-impression en continu comprenant une étape d'impression en continu de la surface intérieure de la bande de la couche inférieure, permettant la protection de l'étiquette RFID contre le rayonnement ultraviolet.

Selon une autre particularité, la surface intérieure de la bande de la couche inférieure et la bande de la couche supérieure sont encollées.

Selon une autre particularité, l'étape de pré-impression consiste en une étape d'impression en continu de la surface intérieure de la bande de la couche inférieure suivie d'une étape d'impression en continu de la surface extérieure de la bande de la couche supérieure.

Selon une autre particularité, l'étape de pré-impression consiste en une étape d'impression en continu de la surface extérieure de la bande de la couche supérieure suivie d'une étape d'impression en continu de la surface intérieure de la bande de la couche inférieure.

Selon une autre particularité, l'étape de contre-collage en continu ou de dépôt de la pluralité d'étiquettes de la bande de la couche inférieure sur la bande d'une couche détachable est suivie d'une étape d'échenillage si l'étape de prédécoupage en continu de la bande de la couche inférieure en une pluralité d'étiquettes a été effectuée.

Selon une autre particularité, l'étape de contre-collage en continu ou de dépôt de la pluralité d'étiquettes de la bande encollée de la couche supérieure sur les bandes de la couche fonctionnelle est suivie d'une étape de mise en pression.

Selon une autre particularité, l'étape de découpage en continu consiste en une découpe des bandes assemblées en bandes de dimensions au moins égales à la longueur ou la largeur d'une étiquette RFID puis un enroulement des bandes découpées sous forme de bobineaux.

Selon une autre particularité, l'étape de découpage en continu consiste en une découpe des bandes assemblées en bandes de dimensions au moins égales à la longueur ou la largeur d'une étiquette RFID puis un pliage des bandes découpées sous forme de paravents.

Selon une autre particularité, l'étape de découpage en continu consiste en une découpe des bandes assemblées en étiquettes RFID individuelles.

Selon une autre particularité, l'étape de contrôle en ligne est réalisée à l'aide d'une antenne de lecture.

Selon une autre particularité, l'étape de personnalisation est suivie d'une étape de conditionnement.

Un autre but est atteint en proposant une machine de production selon le procédé de fabrication de l'étiquette RFID comportant en ligne une succession de postes dont au moins :
- un poste d'alimentation par bobine de la couche inférieure,
- un poste d'alimentation par bobine de la couche supérieure,
- un poste comportant au moins un module d'alimentation par bobine de bande de la couche fonctionnelle.
- au moins un poste d'impression de la couche supérieure,
- un poste d'impression de la couche inférieure permettant la protection de l'étiquette RFID contre le rayonnement ultraviolet.

Selon une autre particularité, la machine comporte en outre :
- un poste d'alimentation par bobine de la couche détachable
- deux têtes d'étiquetage automatique pour le dépôt en continu de la surface inférieure adhésive de la bande de la couche inférieure sur la bande de la couche détachable,

Selon une autre particularité, la machine comporte en outre :
- un poste de façonnage pour le découpage,
- un poste de façonnage pour la présentation des étiquettes RFID en bobineaux, en paravents ou en étiquettes RFID individuelles.

D'autres particularités et avantages de la présente invention apparaîtront plus clairement à la lecture de la description ci-après, faite en référence aux dessins annexés, dans lesquels :
- la figure 1 représente une coupe transversale de l'étiquette RFID ;
- la figure 2 illustre le procédé de fabrication de l'étiquette RFID.
- la figure 3 illustre la machine selon le procédé de fabrication de l'étiquette RFID.

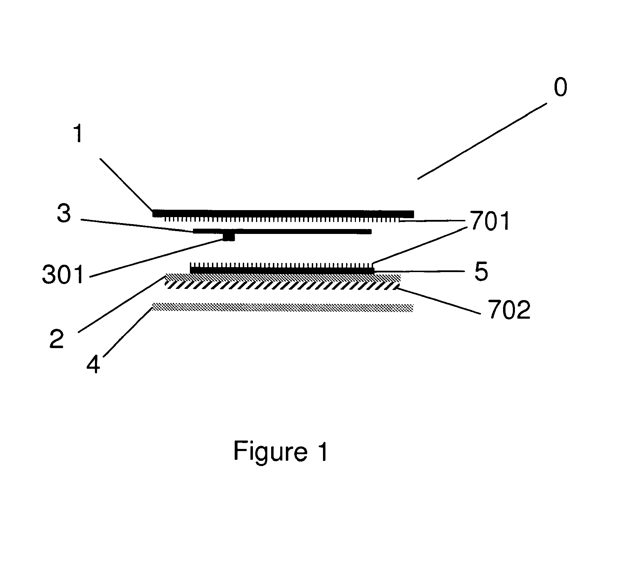

En référence à la figure 1, l'invention concerne une étiquette RFID (0) composée d'au moins :
- une couche fonctionnelle (3) comprenant au moins :
   o un composant électronique (301),
   o une antenne connectée au composant électronique (301) ;
- une couche supérieure (1) ;
- une couche inférieure (2) ayant une surface adhésive ;
   les couches supérieure et inférieure sont constituées d'une ou plusieurs matières aptes à résister au rayonnement ultraviolet et/ou à filtrer le rayonnement ultraviolet et à protéger l'étiquette contre ceux-ci, et une couche de protection supplémentaire contre le rayonnement ultraviolet est imprimée sur la face opposée à la surface adhésive de la couche inférieure.

La couche supérieure (1) est, par exemple, un support en polyester ayant une épaisseur variant de 15 µm à 200 µm.

La couche fonctionnelle (3) est un support, par exemple, en PET (polyéthylène téréphtalate) sur lequel est gravée une antenne, par exemple, en aluminium, connectée à un composant électronique (301) haute fréquence ou ultra-haute fréquence, par exemple, en silicium. Selon l'intégrateur et le type de protocole, le design de l'antenne et le type de composant électronique (301) sont variables.

La couche inférieure (2) est, par exemple, un support en acrylique ou PET possédant une face auto-adhésive et ayant une épaisseur variant, par exemple, de 15 µm à 200 µm.

La face autoadhésive de la couche inférieure (2) est protégée par une couche détachable (4) siliconée, en papier ou en matière synthétique ayant une épaisseur variant, par exemple, de 15 µm à 120 µm. La couche détachable (4) permet une protection contre les salissures et le collage involontaire de la surface auto-adhésive de l'étiquette RFID. La face opposée à la face autoadhésive de la couche inférieure (2) est apte à être imprimée.

La colle utilisée pour la surface auto-adhésive de la couche inférieure (2) est une colle résistant aux rayonnements UV.

La face opposée à la face autoadhésive de la couche inférieure (2) est apte à être imprimée par des encres, par exemple flexographiques, permettant une protection contre un rayonnement ultraviolet de l'étiquette RFID. L'impression de la couche inférieure (2) par des encres permettant une protection contre un rayonnement ultraviolet permet de créer une couche (5) de protection supplémentaire de l'étiquette (0) contre le rayonnement UV. La couche (5) de protection supplémentaire est réalisée, par exemple, par une couche flexographique noire, par une couche sérigraphique blanche et par une impression sérigraphique. L'impression sérigraphique est d'abord réalisée, puis la couche sérigraphique blanche, puis la couche flexographique noire. Ceci permet en outre une protection du composant électronique et de l'antenne contre le rayonnement ultraviolet.

De manière non-limitative, la protection contre le rayonnement ultraviolet de l'étiquette peut être assurée par une combinaison d'encres aptes à résister au rayonnement ultraviolet et/ou à filtrer le rayonnement ultraviolet. Plusieurs couches d'impression d'une même encre sont aptes à résister au rayonnement ultraviolet et/ou à filtrer le rayonnement ultraviolet.

La couche fonctionnelle (3) est prise en sandwich entre la couche supérieure (1) et la couche inférieure (2).

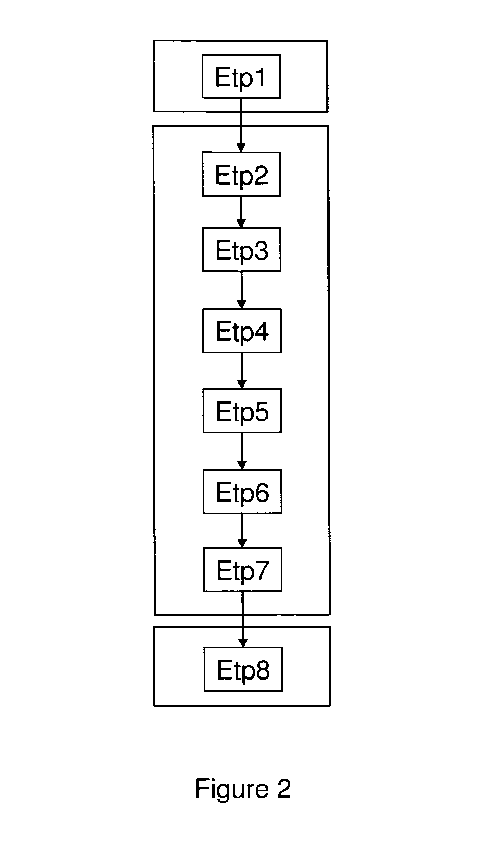

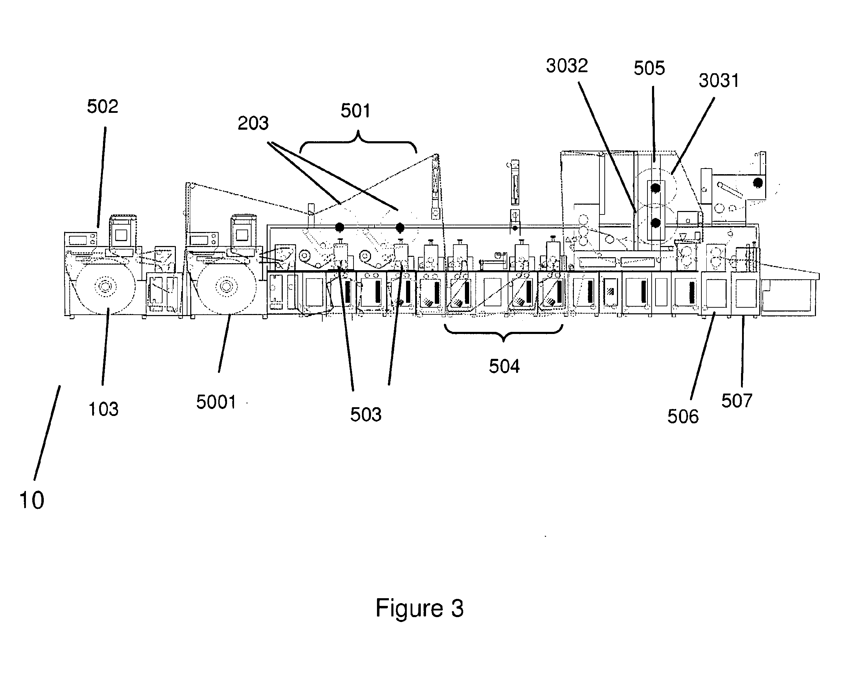

En référence aux figures 2 et 3, le procédé de fabrication de l'étiquette RFID (0) comporte plusieurs étapes qui permettent de réaliser l'impression, le complexage et le façonnage de l'étiquette RFID (0) lors d'un seul passage sur une presse (10).

Avant le passage sur la presse (10), la couche inférieure (2) et la couche supérieure (1) sont alimentées en continu par des bobines (103, 203) fournissant des bandes de largeur au moins égale à un multiple d'une des dimensions de l'étiquette RFID (0) permettant une fabrication d'étiquettes RFID (0) en continu.

La couche fonctionnelle (3) est alimentée en continu par au moins une bobine (3031, 3032) fournissant au moins une bande en parallèle permettant ainsi une fabrication en continu de séries d'au moins une étiquette RFID (0).

Selon une configuration, la largeur des bandes est au moins égale à un multiple de la largeur de l'étiquette RFID (0).

Selon une autre configuration, la largeur des bandes est au moins égale à un multiple de la longueur de l'étiquette RFID (0).

Dans une première étape (Etp1), la bande de la bobine (203) constituant la couche inférieure (2) est dévidée afin de permettre la pré-impression en continu de la bande de la couche inférieure (2) pour une pluralité d'étiquettes. La pré-impression de la couche inférieure (2) est réalisée sur une presse. L'impression permet la protection de l'étiquette RFID (0) contre le rayonnement ultraviolet. Les séries d'étiquettes en sortie de l'étape (Etp1) peuvent, par exemple, être présentées sous forme de bobineaux d'étiquettes.

Cette étape (Etp1) peut être accompagnée d'une étape de prédécoupage en continu de la bande de la couche inférieure (2) en une pluralité d'étiquettes aux dimensions de l'étiquette RFID (0).

Selon une configuration, une étape suivante (Etp2) consiste au contre-collage en continu ou au dépôt de la pluralité d'étiquettes de la couche inférieure (2), réalisées à l'étape précédente sur la couche détachable (4) à l'aide de têtes d'étiquetage automatique.

Si une étape de prédécoupage a été effectuée à l'étape précédente (Etp1), une étape d'échenillage est effectuée afin de retirer les parties inutiles de la bande de la couche inférieure (2).

Dans une étape suivante (Etp3), la bande de la bobine (103) constituant le matériau de la couche supérieure (1) est dévidée en continu afin de permettre l'impression en continu des bandes des couches supérieures (1). L'impression est réalisée en ligne.

Dans une étape suivante (Etp4), les bobines (3031, 3032) constituant la couche fonctionnelle (3) sont dévidées en continu pour être déposées en continu sur le complexe, constitué de la couche détachable (4) et la couche inférieure (2). De la colle est déposée sur le complexe. La colle utilisée est, de manière non-limitative, une colle thermofusible, ou à base aqueuse ou à base solvant ou toute autre colle apte à maintenir efficacement et durablement ensemble les couches de l'étiquette RFID (0). Les bandes constituant la couche fonctionnelle (3) sont découpées en continu en couches fonctionnelles individuelles. Chaque couche fonctionnelle (3) est alors déposée en continu sur la zone encollée du complexe.

Dans une étape suivante (Etp5), la bobine (103) constituant la couche supérieure (1) est dévidée en continu pour déposer en continu la bande de la couche supérieure (1) sur les couches fonctionnelles (3) collées sur la couche inférieure (2) à l'étape précédente (Etp4). De la colle est déposée sur la surface intérieure de la couche supérieure (1) avant de venir la coller sur le complexe par mise en pression.

Dans une étape suivante (Etp6), un façonnage des étiquettes RFID est réalisé.

Selon une configuration, les bandes assemblées aux étapes précédentes sont découpées longitudinalement en continu afin d'obtenir une pluralité de bandes de dimensions au moins égales à la longueur ou la largeur d'une étiquette RFID (0) et dont le nombre de bandes est égal au nombre de bobines de couche fonctionnelle (3). Chaque bande obtenue est ensuite enroulée sous forme de bobineaux.

Selon une autre configuration, les bandes assemblées aux étapes précédentes sont découpées longitudinalement en continu afin d'obtenir une pluralité de bandes de dimensions au moins égales à la longueur d'une étiquette RFID (0) et dont le nombre de bandes est égal au nombre de bobines de couche fonctionnelle (3). Chaque bande subit une série de lignes de perforations pour conditionner les bandes d'étiquettes RFID en paravents ou pour plier les bandes et séparer les étiquettes RFID (0) facilement. La distance entre chaque ligne de perforations est égale au moins à la largeur d'une étiquette RFID (0).

Selon une autre configuration, les bandes assemblées aux étapes précédentes sont découpées longitudinalement en continu afin d'obtenir une pluralité de bandes de dimension au moins égale à la largeur d'une étiquette RFID (0) et dont le nombre de bandes est égal au nombre de bobines de couche fonctionnelle (3). Chaque bande subit une série de lignes de perforations pour conditionner les bandes d'étiquettes RFID en paravents ou pour plier les bandes et séparer les étiquettes RFID (0) facilement. La distance entre chaque ligne de perforations est égale au moins à la longueur de l'étiquette RFID (0).

Selon une autre configuration, les bandes assemblées aux étapes précédentes sont découpées en continu en étiquettes RFID (0) individuelles.

Dans une étape suivante (Etp7), le bon fonctionnement de chaque système de composant électronique (301) connecté à une antenne, de chaque étiquette RFID (0) est contrôlé en continu grâce à une antenne de lecture.

Dans une étape suivante non représentée, chaque composant électronique associé à une étiquette subit une personnalisation graphique et électrique. Quelle que soit la présentation du produit en bobineaux, en paravents ou en étiquettes individuelles, lors de la personnalisation, suivant les besoins, une lecture d'un identifiant, un codage du composant électronique et un numérotage, permettant ensuite son impression sont, par exemple, possibles, ainsi que la création d'un fichier log ou autre selon la demande.

Dans une étape suivante (Etp8), les bobineaux, les paravents et les étiquettes individuelles peuvent être conditionnés suivant les besoins ou la demande d'un client.

En référence à la figure 3, la machine de production (10) selon le procédé de fabrication de l'étiquette RFID (0) comporte en ligne une succession de postes dont au moins :
- un poste d'alimentation (501) par bobine (203) de la couche inférieure (2),
- un poste d'alimentation (502) par bobine (103) de la couche supérieure (1),
- un poste (505) comportant au moins un module d'alimentation par bobine (3031, 3032) de bandes de la couche fonctionnelle (3),
- un poste d'impression de la couche inférieure permettant la protection de l'étiquette RFID contre le rayonnement ultraviolet.
- au moins un poste d'impression (504) de la couche supérieure (1). Préférentiellement, la machine de production (10) comporte en outre :
- un poste d'alimentation (5001) par bobine de la couche détachable (4)
- deux têtes d'étiquetage automatique (503) pour le dépôt en continu de la surface inférieure adhésive de la bande de la couche inférieure (2) sur la bande de la couche détachable (4).

Préférentiellement, la machine de production (10) comporte en outre :
- un poste de façonnage (506) pour le découpage,
- un poste de façonnage (507) pour la présentation des étiquettes RFID (0) en bobineaux, en paravents ou en étiquettes RFID individuelles.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Étiquette RFID (0) composée-d'au moins :
- une couche fonctionnelle (3) comprenant au moins :
- un composant électronique (301),
- une antenne connectée au composant électronique (301);
- une couche supérieure (1);
- une couche inférieure (2) ayant une surface adhésive ;
les couches supérieure et inférieure étant constituées d'une ou plusieurs matières aptes à résister au rayonnement ultraviolet et/ou à filtrer le rayonnement ultraviolet,
**caractérisée en ce qu'**une couche (5) de projection supplémentaire contre le rayonnement ultraviolet est imprimée sur la face opposée à la surface adhésive de la couche, (2) inférieure.

2. Étiquette RFID (0) selon la revendication 1 **caractérisée en ce que** la couche supérieure (1) est en papier ou en matière synthétique possédant un revêtement apte à être imprirmé.

3. Étiquette RFID (0) selon la revendication 1 **caractérisée en ce que** la couche inférieure (2) est en papier ou en matière synthétique apte à résister à un rayonnement ultraviolet et/ou filtrer le rayonnement ultraviolet et possédant une face autoadhésive protégée par une couche détachable (4).

4. Étiquette RFID (0) selon la revendication 3 **caractérisée en ce que** la face autoadhésive est constituée d'une colle dont les propriétés physico-chimiques ne s'altèrent pas si elle est soumisse à un rayonnement ultraviolet.

5. Étiquette RFID (0) selon la revendication. 1 **caractérisée en ce que** la couche fonctionnelle (3) est en papier ou en matière synthétique sur lequel est gravée ou imprimée l'antenne connectée au composant électronique (301).

6. Étiquette RFID (0) selon la revendication 1 **caractérisée en ce que** les couches (1, 2, 3) sont assemblées entre elles par collage.

7. Étiquette RFID (0) selon les revendications 1 à 6, **caractérisée en ce que** la couche supérieure (1) et/ou la face correspondant à la surface adhésive de la couche inférieure (2) et/ou la couche fonctionnelle (3) possèdent une ou plusieurs couches d'impression de combinaison d'encre aptes à résister aux rayonnements ultraviolets et/ou à filtrer le rayonnement ultraviolet.

8. Étiquette RFID (0) selon la revendication 1, **caractérisée en ce que** la couche (5) de protection supplémentaire est réalisée par l'impression d'au moins une couche d'encre.

9. Procédé de fabrication de l'étiquette RFID (0) selon les revendications 1 à 8 **caractérisé en ce que** la couche supérieure (1) et la couche inférieure (2) sont alimentées en continu par des bobines (103, 203) fournissant des bandes de largeur au moins égale à un multiple d'une des dimensions de l'étiquette RFID (0),
**en ce que** la couche fonctionnelle (3) est alimentée en continu par au moins une bobine (3031, 3032) fournissant au moins une bande en parallèle
et **en ce qu'**il comporte au moins les étapes suivantes :
- une étape (Etp1) de pré-impression en continu et/ou de prédécoupage en continu de la bande de la couche inférieure (2) en une pluralité d'étiquettes ;
- une étape (Etp2) de contre-collage en continu ou de dépôt de la pluralité d'étiquettes de la bande de la couche inférieure (2) sur la bande d'une couche détachable (4) ;
- si besoin, une étape (Etp3) d'impression en continu de la bande de la couche supérieure (1) ;
- une étape (Etp4) de dépôt en continu de la ou des bandes de la couche fonctionnelle (3) sur la surface intérieure encollée de la bande de la couche inférieure (2) ;
- une étape (Etp5) de dépôt en continu de la bande encollée de la couche supérieure (1) sur la ou les bandes de la couche fonctionnelle (3) ;
- une étape (Etp6) de découpage en continu ;
- une étape (Etp7) de contrôle en ligne en continu ;
- une étape de personnalisation, graphique et électrique, en ligne en continu,
l'étape (Etp1) de pré-impression en continu comprenant une étape d'impression en continu de la surface intérieure de la bande de la couche inférieure (2), permettant la protection de l'étiquette RFID (0) contre le rayonnement ultraviolet.

10. Procédé de fabrication selon la revendication 9 **caractérisé en ce que** la surface intérieure de la bande de la couche inférieure (2) et la bande de la couche supérieure (1) sont encollées.

11. Procédé de fabrication selon la revendication 9 **caractérisé en ce que** l'étape (Etp1) de pré-impression consiste en l'étape d'impression en continu de la surface intérieure de la bande de la couche inférieure (2) suivie d'une étape d'impression en continu de la surface extérieure de la bande de la couche supérieure (1)

12. Procédé de fabrication selon la revendication 9 **caractérisé en ce que** l'étape (Etp1) de pré-impression consiste en une étape d'impression en continu de la surface extérieure de la bande de la couche supérieure (1) suivie de l'étape d'impression en continu de la surface intérieure de la bande de la couche inférieure (2).

13. Procédé de fabrication selon la revendication 9 **caractérisé en ce que** l'étape (Etp2) de contre-collage en continu ou de dépôt en continu de la bande de la couche inférieure (2) sur la bande d'une couche détachable (4) est suivie d'une étape d'échenillage, si l'étape (Etp1) de prédécoupage en continu de la bande de la couche inférieure (2) en une pluralité d'étiquettes a été effectuée.

14. Procédé de fabrication selon la revendication 9 **caractérisé en ce que** l'étape (Etp6) de découpage en continu consiste en une découpe des bandes assemblées en bandes de dimensions au moins égales à la longueur ou la largeur d'une étiquette RFID (0) puis un enroulement des bandes découpées sous forme de bobineaux, ou en une découpe des bandes assemblées en bandes de dimensions au moins égales à la longueur ou la largeur d'une étiquette RFID (0) puis un pliage des bandes découpées sous forme de paravents, ou en une découpe des bandes assemblées en étiquettes RFID (0) individuelles.

15. Procédé de fabrication selon la revendication 9 **caractérisé en ce que** l'étape (Etp7) de contrôle en ligne est réalisée à l'aide d'une antenne de lecture.

16. Machine de production de l'étiquette RFID (0) mettant en oeuvre le procédé de fabrication selon les revendications 9 à 15 comportant en ligne une succession de postes dont au moins :
- un poste d'alimentation (501) par bobine (203) de la couche inférieure (2) ;
- un poste d'alimentation (502) par bobine (103) de la couche supérieure (1) ;
- un poste (505) comportant au moins un module d'alimentation par bobine (3031, 3032) de bandes de la couche fonctionnelle (3)
- au moins un poste d'impression (504) de la couche supérieure (1)
- un poste d'impression de la couche inférieur (2) permettant la protection de l'étiquette RFID (0) contre le rayonnement ultraviolet.

17. Machine de production selon la revendication 16 comportant en outre :
- un poste d'alimentation (5001) par bobine de la couche détachable (4)
- deux têtes d'étiquetage automatique (503) pour le dépôt en continu de la surface inférieure adhésive de la bande de la couche inférieure (2) sur la bande de la couche détachable (4).

18. Machine de production selon la revendication 16 comportant en outre :
- un poste de façonnage (506) pour le découpagé ;
- un poste de façonnage (507) pour la présentation dés étiquettes RFID (0) en bobineaux, en paravents ou en étiquettes RFID (0) individuelles.

## Patentansprüche

1. RFID-Etikett (0), zusammengesetzt aus mindestens:
- einer funktionalen Schicht (3), die mindestens aufweist:
- ein elektronisches Bauelement (301),
- eine Antenne, die mit dem elektronischen Bauelement (301) verbunden ist,
- eine obere Schicht (1),
- eine untere Schicht (2), die eine Klebefläche aufweist,
wobei die obere Schicht und die untere Schicht aus einem oder mehr Materialien gebildet sind, die geeignet sind, ultravioletter Strahlung standzuhalten und/oder ultraviolette Strahlung zu filtern,
**dadurch gekennzeichnet, dass** eine zusätzliche Schutzschicht (5) gegen ultraviolette Strahlung auf die Seite aufgedruckt ist, die entgegengesetzt zu der Klebefläche der unteren Schicht (2) ist.

2. RFID-Etikett (0) gemäß Anspruch 1, **dadurch gekennzeichnet, dass** die obere Schicht (1) aus Papier oder einem Kunststoff mit einer Beschichtung ist, die bedruckbar ist.

3. RFID-Etikett (0) gemäß Anspruch 1, **dadurch gekennzeichnet, dass** die untere Schicht (2) aus Papier oder aus einem Kunststoff ist, der geeignet ist, einer ultravioletten Strahlung standzuhalten und/oder ultraviolette Strahlung zu filtern, und eine selbstklebende Fläche aufweist, die durch eine ablösbare Schicht (4) geschützt ist.

4. RFID-Etikett (0) gemäß Anspruch 3, **dadurch gekennzeichnet, dass** die selbstklebende Schicht aus einem Klebstoff gebildet ist, dessen physikochemischen Eigenschaften sich nicht ändern, wenn er ultravioletter Strahlung ausgesetzt wird.

5. RFID-Etikett (0) gemäß Anspruch 1, **dadurch gekennzeichnet, dass** die funktionale Schicht (3) aus Papier oder einem Kunststoff ist, auf das/den die Antenne, die mit dem elektronischen Bauelement (301) verbunden ist, aufgeprägt oder aufgedruckt ist.

6. RFID-Etikett (0) gemäß Anspruch 1, **dadurch gekennzeichnet, dass** die Schichten (1, 2, 3) durch Kleben aneinandergefügt sind.

7. RFID-Etikett (0) gemäß den Ansprüchen 1 bis 6, **dadurch gekennzeichnet, dass** die obere Schicht (1) und/oder die Fläche, die mit der Klebeschicht (2) korrespondiert, und/oder die funktionale Schicht (3) eine oder mehr Druckfarbenkombinations-Druckschichten aufweisen, die geeignet sind, ultravioletter Strahlung standzuhalten und/ oder ultraviolette Strahlung zu filtern.

8. RFID-Etikett (0) gemäß Anspruch 1, **dadurch gekennzeichnet, dass** die zusätzliche Schutzschicht (5) durch Aufdrucken mindestens einer Druckfarbschicht realisiert ist.

9. Verfahren zum Herstellen des RFID-Etiketts (0) gemäß den Ansprüchen 1 bis 8, **dadurch gekennzeichnet, dass** die obere Schicht (1) und die untere Schicht (2) kontinuierlich von Rollen (103, 203) zugeführt werden, die Bänder mit einer Breite bereitstellen, die mindestens gleich einem Vielfachen einer der Abmessungen des RFID-Etiketts (0) ist,
dass die funktionale Schicht (3) kontinuierlich von mindestens einer Rolle (3031, 3032) zugeführt wird, die mindestens ein Band parallel bereitstellt,
und dass es mindestens die folgenden Schritte aufweist:
- einen Schritt (Etp1) des kontinuierlichen Vordruckens und/oder des kontinuierlichen Vorschneidens des Bandes der unteren Schicht (2) in eine Mehrzahl von Etiketten,
- einen Schritt (Etp2) des kontinuierlichen Laminierens oder des Aufbringens der Mehrzahl von Etiketten des Bandes der unteren Schicht (2) auf das Band einer ablösbaren Schicht (4),
- falls erforderlich, einen Schritt (Etp3) des kontinuierlichen Bedruckens des Bandes der oberen Schicht (1),
- einen Schritt (Etp4) des kontinuierlichen Aufbringens des oder der Bänder der funktionalen Schicht (3) auf die Innenklebefläche des Bandes der unteren Schicht (2),
- einen Schritt (Etp5) des kontinuierlichen Aufbringens des Klebebandes der oberen Schicht (1) auf das oder die Bänder der funktionalen Schicht (3),
- einen Schritt (Etp6) des kontinuierlichen Zerschneidens,
- einen Schritt (Etp7) der kontinuierlichen prozessgekoppelten Steuerung,
- einen Schritt der kontinuierlichen prozessgekoppelten graphischen und elektrischen Personalisierung,
wobei der Schritt (Etp1) des kontinuierlichen Vordruckens einen Schritt des kontinuierlichen Bedruckens der Innenfläche des Bandes der unteren Schicht (2) aufweist, wodurch das Schützen des RFID-Etiketts (0) vor ultravioletter Strahlung ermöglicht wird.

10. Herstellungsverfahren gemäß Anspruch 9, **dadurch gekennzeichnet, dass** die Innenfläche des Bandes der unteren Schicht (2) und das Band der oberen Schicht (1) aneinandergeklebt werden.

11. Herstellungsverfahren gemäß Anspruch 9, **dadurch gekennzeichnet, dass** der Schritt (Etp1) des Vordruckens aus dem Schritt des kontinuierlichen Bedruckens der Innenfläche des Bandes der unteren Schicht (2) gefolgt von einem Schritt des kontinuierlichen Bedruckens der Außenfläche des Bandes der oberen Schicht (1) besteht.

12. Herstellungsverfahren gemäß Anspruch 9, **dadurch gekennzeichnet, dass** der Schritt (Etp1) des Vordruckens aus einem Schritt des kontinuierlichen Bedruckens der Außenfläche des Bandes der oberen Schicht (1) gefolgt von dem Schritt des kontinuierlichen Bedruckens der Innenfläche des Bandes der unteren Fläche (2) besteht.

13. Herstellungsverfahren gemäß Anspruch 9, **dadurch gekennzeichnet, dass** auf den Schritt (Etp2) des kontinuierlichen Laminierens oder des kontinuierlichen Aufbringens des Bandes der unteren Schicht (2) auf das Band einer ablösbaren Schicht (4) ein Abfall-Entfernungsschritt folgt, wenn der Schritt (Etp1) des kontinuierlichen Vorschneidens des Bandes der unteren Schicht (2) in eine Mehrzahl von Etiketten durchgeführt wurde.

14. Herstellungsverfahren gemäß Anspruch 9, **dadurch gekennzeichnet, dass** der Schritt (Etp6) des kontinuierlichen Zerschneidens aus einem Zerschneiden der aneinandergefügten Bänder in Bänder mit Abmessungen, die mindestens gleich der Länge oder der Breite eines RFID-Etiketts (0) sind, und anschließend aus einem Aufrollen der zerschnittenen Bänder in Form von Rollen, oder aus einem Zerschneiden der aneinandergefügten Bänder in Bänder mit Abmessungen, die mindestens gleich der Länge oder der Breite eines RFID-Etiketts (0) sind, und anschließend einem Zusammenlegen der zerschnittenen Bänder in Paravent-Form, oder einem Zerschneiden der aneinandergefügten Bänder in einzelne RFID-Etiketten (0) besteht.

15. Herstellungsverfahren gemäß Anspruch 9, **dadurch gekennzeichnet, dass** der Schritt (Etp7) der prozessgekoppelten Steuerung mit Hilfe einer Leseantenne erfolgt.

16. Vorrichtung zur Herstellung des RFID-Etiketts (0), die das Herstellungsverfahren gemäß den Ansprüchen 9 bis 15 durchführt, aufweisend eine prozessgekoppelte Folge von mindestens den folgenden Stationen:
- eine Station zum Zuführen (501) der unteren Schicht (2) mittels einer Rolle (203),
- eine Station zum Zuführen (502) der oberen Schicht (1) mittels einer Rolle (103),
- eine Station (505), die mindestens ein Modul zum Zuführen von Bändern der funktionalen Schicht (3) mittels einer Rolle (3031, 3032) aufweist,
- mindestens eine Station zum Bedrucken (504) der oberen Schicht (1),
- eine Station zum Bedrucken der unteren Schicht (2), die das Schützen des RFID-Etiketts (0) vor ultravioletter Strahlung ermöglicht.

17. Herstellungsvorrichtung gemäß Anspruch 16, ferner aufweisend:
- eine Station zum Zuführen (5001) der ablösbaren Schicht (4) mittels einer Rolle,
- zwei Köpfe zur automatischen Etikettierung (503) zum kontinuierlichen Aufbringen der unteren Klebeschicht des Bandes der unteren Schicht (2) auf das Band der ablösbaren Schicht (4).

18. Herstellungsvorrichtung gemäß Anspruch 16, ferner aufweisend:
- eine Bearbeitungsstation (506) für das Zerschneiden,
- eine Bearbeitungsstation (507) zum Präsentieren der RFID-Etiketten (0) in Form von Rollen, in Paravent-Form oder als einzelne RFID-Etiketten (0).

## Claims

1. RFID tag (0) composed of at least:
- one functional layer (3) c omprising at least:
- one electronic component (301);
- one antenna connected to the electronic component (301);
- one upper layer (1);
- one lower layer (2) having an adhesive surface; wherein the upper and lower layers consist of one or more materials capable of resisting ultraviolet radiation and/or of filtering ultraviolet radiation,
**characterised in that** an additional protective layer (5) against ultraviolet radiation is printed on the face opposite the adhesive surface of the lower layer (2).

2. RFID tag (0) as claimed in Claim 1, **characterised in that** the upper layer (1) is made of paper or of a synthetic material having a coating which is capable of being printed.

3. RFID tag (0) as claimed in Claim 1, **characterised in that** the lower layer is made of paper or of a synthetic material capable of resisting ultraviolet radiation and/or of filtering the ultraviolet radiation and having a self-adhesive face protected by a detachable layer.

4. RFID tag (0) as claimed in Claim 3, **characterised in that** the self-adhesive face consists of a glue of which the physico-chemical properties do not alter if it is subjected to ultraviolet radiation.

5. RFID tag (0) as claimed in Claim 1, **characterised in that** the functional layer (3) is made of paper or of synthetic material on which is etched or printed the antenna connected to the electronic component (301).

6. RFID tag (0) as claimed in Claim 1, **characterised in that** the layers (1, 2, 3) are assembled together by glueing.

7. RFID tag (0) as claimed in Claims 1 to 6, **characterised in that** the upper layer (1) and/or the face corresponding to the adhesive surface of the lower layer (2) and/or the functional layer (3) have one or more combined printing inks capable of resisting ultraviolet. radiation and/or of filtering ultraviolet radiation.

8. RFID tag (0) as claimed in Claim 1, **characterised in that** the additional protective layer is produced by printing of at least one layer of ink.

9. Method of manufacture of the RFID tag (0) as claimed in Claims 1 to 8, **characterised in that** the upper layer (1) and the lower layer (2) are continuously fed by reels (103, 203) providing strips with a width at least equal to a multiple of one of the dimensions of the RFID tag (0), **in that** the functional layer (3) is continuously fed by at least one reel (3031, 3032) providing at least one strip in parallel, and **in that** it includes at least the following steps:
- a step (Etp1) of continuously pre-printing and/or continuously pre-cutting the strip of the lower layer (2) into a plurality of tag;
- a step (Etp2) of continuously laminating or depositing the plurality of tags of the strip of the lower layer (2) onto the strip of a detachable layer (4);
- if need be, a step (Etp3) of continuously printing the strip of the upper layer (1);
- a step (Etp4) of continuously depositing the strip or strips of the functional layer (3) on the glued inner surface of the strip of the lower layer (2);
- a step (Etp5) of continuously depositing the glued strip of the upper layer (1) onto the strip or strips of the functional layer (3);
- a continuous step (Etp6) of cutting out;
- a step (Etp7) of in-line continuous control;
- a step of continuous in-line graphic and electrical in-line customisation,
the step (Etp1) of continuous pre-printing comprising a step of continuously printing the inner surface of the strip of the lower layer (2), permitting the protection of the RFID tag (0) against ultraviolet radiation.

10. Method of manufacture as claimed in Claim 9, **characterised in that** the inner surface of the strip of the lower layer (2) and the strip of the upper layer (1) are glued.

11. Method of manufacture as claimed in Claim 9, **characterised in that** the step (Etp1) of pre-printing consists of the step of continuously printing the inner surface of the strip of the lower layer (2) followed by a step of continuously printing the outer surface of the strip of the upper layer (1).

12. Method of manufacture as claimed in Claim 9, **characterised in** tht the step (Etp1) of pre-printing consists of a step of continuously printing the outer surface of the strip of the upper layer (1) followed by the step of continuously printing the inner surface of the strip of the lower layer (2).

13. Method of manufacture as claimed in Claim 9, **characterised in that** the step (Etp2) of continuously laminating or continuously depositing the strip of the lower layer (2) onto the strip of a detachable layer (4) is followed by a step of waste stripping, if the step (Etp1) of continuously pre-cutting of the strip of the lower layer (2) into a plurality of tags has been carried out.

14. Method of manufacture as claimed in Claim 16, **characterised in that** the step (Etp6) of continuously cutting out consists of cutting out the assembled strips into strips with dimensions at least equal to the length or the width of an RFID tag (0) and then winding up the cut-out strips in the form of reels, or of cutting out the assembled strips into strips with dimensions at least equal to the length or the width of an RFID tag (0) and then folding the cut strips in the form of fanfolds, or of cutting out the assembled strips into individual RFID tags (0).

15. Method of manufacture as claimed in Claim 9, **characterised in that** the step (Etp7) of in-line control is carried out with a reader antenna.

16. Machine for production of the RFID tag (0) implementing the method of manufacture as claimed in Claims 9 to 15, including an in-line succession of stations including at least:
- one feeding station (501) for feeding the lower layer (2) by the reel (203);
- one feeding station (502) for feeding the upper layer (1) by the reel (103);
- one station (505) including at least feeding module for feeding strips for the functional layer (3) by reels (3031, 3032);
- at least one printing station (504) for the upper layer (1),
- one printing station for printing the lower layer (2) enabling protection of the RFID tag (0) against ultraviolet radiation.

17. Machine for production as claimed in Claim 16, further including:
- a reel feeding station (5001) for the detachable layer (4),
- two automatic labelling heads (503) for continuously depositing the adhesive lower surface of the strip of the lower layer (2) onto the strip of the detachable layer (4).

18. Machine for production as claimed in Claim 16, further including:
- a forming station (506) for the cutting out;
- a forming station (507) for presentation of the RFID tags (0) as reels, as fanfolds or as individual RFID tags (0).
